# EUROPÄISCHE PATENTSCHRIFT

(11) **EP 1 902 653 B1**
(45) Veröffentlichungstag und Bekanntmachung des Hinweises auf die Patenterteilung: **26.10.2011**
(21) Anmeldenummer: 07116421.4
(22) Anmeldetag: 14.09.2007
(51) Int. Cl.: A47J 31/52, A47J 31/36, A47J 31/46, A47J 31/00

(54) **Verfahren zur Bereitstellung eines Kaffeegetränkes mit einer Kaffeemaschine**
Method of preparing a coffee with a coffee machine
Méthode de préparation de café avec une cafetière

(30) Priorität: 19.09.2006 DE 202006014317 U
(43) Veröffentlichungstag der Anmeldung: 26.03.2008
(73) Patentinhaber: WIK Far East Ltd., Hong Kong (CN)
(72) Erfinder: Steckhan, Markus, 45481 Mülheim (DE)
(74) Vertreter: Haverkamp, Jens

(56) Entgegenhaltungen:
- EP-A- 0 237 475
- DE-A1- 3 316 157
- DE-C1- 3 615 158
- DE-U1-202004 018 776

## Beschreibung

Die Erfindung betrifft ein Verfahren zur Bereitung eines Kaffeegetränks mit einer Kaffeemaschine umfassend eine an eine Heißwasserzuführung angeschlossene Brüheinheit mit einer beim Brühvorgang das gemahlene Kaffeepulver aufnehmenden Brühkammer sowie mit einer Kaffeeauslaufleitung, in die ein Crema-Ventil eingeschaltet ist, und umfassend eine elektromotorisch betriebene Pumpe zum Fördern des der Brüheinheit zuzuführenden Heißwassers, wobei die Leistung der Pumpe zum Bereiten eines Espressokaffees ausgelegt ist.

Kaffeemaschinen, mit denen Portionsweise, beispielsweise Tassenweise, frisch gebrühter Kaffee bereitet werden kann, verfügen über eine Brüheinheit. Diese umfasst einen Brühzylinder, in die nach dem Starten eines Brühzyklus gemahlenes Kaffeepulver eingebracht, darin verdichtet und anschließend Heißwasser hindurch geführt wird, bevor das ausgelaugte Kaffeemehl aus dem Brühzylinder ausgestoßen wird. Je nach Konzeption der Brüheinheit verfügt diese über zumindest zwei bewegliche Elemente, wobei es sich bei diesen um zwei gegeneinander bewegliche Kolben oder um einen Kolben und einen Brühzylinder handeln kann. Es sind auch Brüheinheiten bekannt geworden, in denen sowohl die beiden Kolben als auch der Brühzylinder gegeneinander beweglich sind. Zum Bewegen der vorgenannten Elemente der Brüheinheit dient eine Antriebseinrichtung, deren Antriebskraft auf eines oder mehrere der bewegbaren Elemente wirkt. Zum Zuführen des Heißwassers dient eine innerhalb der Kaffeemaschine angeordnete Pumpe. Kaffeemaschinen, mit denen ein Espressokaffee bereitet werden soll, verfügen über Pumpen zum Zuführen des Heißwassers, die einen Druck von etwa 16 bar bereitstellen können. An die Pumpe angeschlossen ist eine Heißwasserzuführung. Ist die Brüheinheit aus der Kaffeemaschine herausnehmbar, ist in die Heißwasserzuführung eine Leitungskupplung eingeschaltet. Die Heißwasserzuführung mündet in die Brühkammer zumeist über einen der beiden Kolben, oftmals über dessen mit einer Siebplatte ausgerüsteten Kolbenboden. Zum Auslassen des gebrühten Kaffees trägt der die Brühkammer in der Brühstellung des Brühzylinders ausgangsseitig begrenzende Gegenkolben eine Siebplatte. Unmittelbar in Strömungsrichtung hinter der Siebplatte befindet sich ein Sammler, von dem eine Kaffeeauslaufleitung abgeht. In die Kaffeeauslaufleitung ist ein Crema-Ventil eingeschaltet. Durch das Crema-Ventil ist die Auslaufleitung grundsätzlich verschlossen. Das Crema-Ventil öffnet bei Überschreiten eines vorbestimmten Druckes. Dieses gewährleistet, dass aus der Brühkammer nur dann das gebrühte Kaffeegetränk ausfließt, wenn in dieser wenigstens der zum Öffnen des Crema-Ventils notwendige Druck herrscht. Beim Hindurchtreten des gebrühten Kaffeegetränks durch das Crema-Ventil erhält der gebrühte Espresso die gewünschte schaumartige Crema.

DE 36 15 158 C1 offenbart ein Verfahren zur Zubereitung einer Mehrzahl von Kaffeeportionen mit gleich bleibender Qualität. Das in diesem Dokument beschriebene Verfahren schafft eine Kompensation dafür, dass sich im Zuge der Bereitung einer Mehrzahl von Kaffeeportionen die Körnung des Kaffeepulvers verändern kann. Die Folge ist, dass mit zunehmender Anzahl bereiteter Kaffeeportionen sich die Kaffeequalität ändert. Zur Begegnung dieser Problematik wird als Lösung vorgeschlagen, dass während eines ersten Kaffeezubereitungs-Zyklus eine vorgegebene Menge an Brühwasser in die Brühkammer eingeleitet und die Durchlaufzeit des Brühwassers durch die das Kaffeepulver enthaltende Brühkammer gemessen wird. In Abhängigkeit von der Körnung des in der Brühkammer befindlichen Kaffeepulvers ist die Durchlaufzeit des zugeführten Heißwassers entweder kürzer oder länger. Der gemessene Wert der Durchlaufzeit wird mit einem vorgegebenen Sollwert verglichen, wobei vorgesehen ist, dass bei einer ein bestimmtes Maß überschreitenden Abweichung des gemessenen Wertes der Durchlaufzeit vom Sollwert der Mahlgrad des in die Brühkammer einzuführenden Kaffeepulvers während eines der nachfolgenden Kaffeezubereitungs-Zyklen verändert wird. Mit dieser Maßnahme wird eine über die Zeit eingetretene Verstellung des gewünschten Mahlgrades korrigiert.

Neben diesen, zum Bereiten eines Espressokaffees bekannt gewordenen Kaffeemaschinen werden auch solche eingesetzt, mit denen der Kaffee mit einem geringeren Wasserdruck gebrüht wird. Die Pumpenleistung dieser Kaffeemaschinen ist daher deutlich geringer. Diese Kaffeemaschinen arbeiten mit einem Pumpendruck von etwa 1,5 bis 2 bar. In die Kaffeeauslaufleitung einer solchen Kaffeemaschine ist kein Crema-Ventil eingeschaltet. Der durch die Pumpe bereitgestellte Druck reicht nicht aus, um ein solches Crema-Ventil öffnen zu können. Üblicherweise unterscheidet sich die Kaffeesorte, die zum Brühen eines Kaffees mit einer solchen Niederdruckkaffeemaschine zum Brühen eines Kaffeegetränkt verwendet wird, von derjenigen zum Bereiten eines Espressokaffees. Überdies unterscheiden sich die Brühzyklen der beiden Kaffeemaschinen. Aus diesem Grunde ist die Bereitung eines Kaffeegetränks mit einer solchen Kaffeemaschine letztendlich auf ein solches beschränkt, für das die Kaffeemaschine konzipiert ist. Mit einer zum Bereiten eines Espressokaffees vorgesehenen Kaffeemaschine ist daher nicht möglich, ein Kaffeegetränk bereitzustellen, welches geschmacklich einem Kaffeegetränk entspricht, das mit einer mit einer Niederdruckpumpe arbeitenden Kaffeemaschine bereitet wird.

Ausgehend von diesem diskutierten Stand der Technik liegt der Erfindung daher die Aufgabe zugrunde, ein eingangs genanntes Verfahren zum Bereiten eines Kaffeegetränkes mit einer Kaffeemaschine vorzuschlagen, dass sich mit dieser mit geänderten Brühbedingungen auch ein Kaffeegetränk bereiten lässt, dass demjenigen einer mit Niederdruck arbeitenden Kaffeemaschine entspricht.

Diese Aufgabe wird durch ein Verfahren mit den Merkmalen des Anspruchs 1 gelöst.

Bei dieser Kaffeemaschine erfolgt eine Erkennung des in der Brühkammer befindlichen Kaffeepulvers in Abhängigkeit von dem von dem Kaffeepulver dem zugeführten Heißwasser entgegenwirkenden Gegendruck. Befindet sich in der Brühkammer Kaffeepulver zum Bereiten eines Espressokaffees handelt es sich um ein Kaffeepulver, welches sehr viel feiner gemahlen ist als ein Kaffeepulver zum Bereiten eines herkömmlichen Kaffees. In Folge der unterschiedlichen Körnung des in der Brühkammer befindlichen Kaffeepulvers ist das verbleibende Porenvolumen und damit die freie durchströmbare Querschnittsfläche größer oder kleiner. Befindet sich in der Brühkammer fein gemahlenes Kaffeepulver, ist die freie durchströmbare Querschnittsfläche geringer als bei Verwendung eines Kaffeepulvers mit einem gröberen Mahlgrad. Der in Abhängigkeit von der Kaffeekörnung dem zugeführten Heißwasser entgegenwirkende Gegendruck bleibt auch dann in Abhängigkeit von der Kaffeekörnung unterschiedlich, wenn dieser durch zwei die Brühkammer in ihrer Brühstellung begrenzende Kolben verdichtet wird. Durch geeignete Einrichtungen und/oder Mittel wird der sich dem zugeführten Heißwasser zu Beginn eines Brühvorganges durch das in der Brühkammer befindliche Kaffeepulver entgegenstellenden Gegendruckes erfasst. Der Gegendruck erlaubt einen Rückschluss auf das mit diesem Brühzyklus zu bereitende Kaffeegetränk.

Das Detektieren der Körnung des in der Brühkammer befindlichen Kaffeepulvers mit dem sich daraus ableitenden Rückschluss auf das zubereitende Kaffeegetränk ermöglicht eine automatische Anpassung des aktuellen Brühzyklus an die zum Bereiten des gewünschten Kaffeegetränks gestellten Anforderungen. Befindet sich in der Brühkammer beispielsweise ein Kaffeepulver gröberer Körnung bedeutet dieses, dass kein Espressokaffee gebrüht werden soll. Entsprechend kann der ablaufende Brühzyklus zum Bereiten eines normalen Kaffees geändert werden, beispielsweise dadurch, dass die Pumpenleistung reduziert wird, damit das zugeführte Heißwasser in der Brühkammer eine längere Verweildauer hat. Da typischerweise zur Bereitung eines solchen Kaffees die Wassertemperatur geringer sein soll als diejenige zum Bereiten eines Espressokaffees, kann ebenfalls die Temperatur des zugeführten Heißwassers geringer sein. Mithin besteht die Möglichkeit, auf die Temperaturregelung des zugeführten Heißwassers Einfluss zu nehmen. Bei einer solchen Kaffeemaschine wird man vorzugsweise ein ansteuerbares Crema-Ventil einsetzen, dass durch einen Aktor bei Detektion eines gröberkörnigen Kaffeepulvers in der Brühkammer in eine Offen-Stellung gebracht wird, damit durch dieses nicht ein höherer Gegendruck aufgebaut wird als durch das in der Brühkammer befindliche Kaffeepulver.

Zum Ansteuern dieses oder auch weiterer Aktoren der Kaffeemaschine in Abhängigkeit von dem erfassten, durch das in der Brühkammer befindliche Kaffeepulver entgegenwirkenden Gegendruck ist die Einrichtung oder das Mittel zum Erfassen desselben an eine Auswerteeinheit, beispielsweise einen Prozessor angeschlossen, der die den aktuellen Gegendruck darstellenden Signale auswertet und in Abhängigkeit hiervon Steuersignale generiert, mit denen der oder die Aktoren zum Ändern des Brühzyklus angesteuert werden.

Die Brüheinheit einer solchen Kaffeemaschine kann eine bezüglich ihrer Größe unabhängig vom Brühzyklus gleich bleibende Brühkammer aufweisen. Dies ist beispielsweise der Fall, wenn es sich bei dieser Kaffeemaschine um eine solche handelt, in die portionsweise in einer wasserdurchlässigen Hülle eingepackter Kaffee bereitet wird. Bei einer als Vollautomat ausgestatteten Kaffeemaschine, bei der für jeden Brühzyklus das Kaffeepulver frisch gemahlen wird, ist die Größe der Brühkammer veränderlich und zwar in Abhängigkeit der in die Brühkammer eingebrachten Kaffeemenge. Die Brühkammer ist während des Brühvorganges bei einer solchen Kaffeemaschine durch zwei Kolben begrenzt, die gegeneinander beweglich sind. Zumindest einer der beiden Kolben ist mittelbar oder unmittelbar angetrieben. Somit kann der Antrieb des zumindest einen Kolben als Aktor genutzt werden, um bei der Detektion eines beispielsweise geringeren, durch das in der Brühkammer befindliche Kaffeepulver bereitgestellten Gegendruckes den Abstand der beiden Kolben zueinander besonders groß zu lassen, damit das Kaffeepulver in der Brühkammer beim Bereiten des Kaffees quasi schwimmen kann. Im Unterschied hierzu ist man bestrebt, bei der Zubereitung eines Espressokaffees mit dem entsprechend feiner gemahlenen Kaffeepulver das Kaffeepulver in dem zugeführten Heißwasser nicht schwimmen zu lassen, sondern das Heißwasser durch das Kaffeepulver hindurch zu pressen. Dann wird man den Abstand der beiden Kolben möglichst minimieren und das in der Brühkammer befindliche Kaffeepulver verdichten.

Als Einrichtung zum Erfassen des durch das in der Brühkammer befindliche Kaffeepulver bereitgestellten Gegendruckes kann beispielsweise eine in die Heißwasserzuführung eingeschaltete Durchflussmesseinrichtung dienen. Die Durchflussrate des zugeführten Heißwasser ist abhängig von dem durch das Kaffeepulver bereitgestellten Gegendruck. Bei einem höheren Gegendruck ist die Durchflussrate geringer als bei einem geringeren Gegendruck. Eine solche Durchflussmesseinrichtung kann integraler Bestandteil der das Heißwasser fördernden Pumpe sein. Zum Erfassen des Gegendruckes besteht neben anderen Möglichkeiten ebenfalls die Möglichkeit, ein oder mehrere lastabhängige Größen, etwa die Stromaufnahme des die Pumpe antreibenden Elektromotors einzusetzen.

Nachfolgend ist die Erfindung anhand eines Ausführungsbeispiels unter Bezugnahme auf die beigefügten Figuren beschrieben. Es zeigen:
- **Fig.1:**: eine schematisierte Darstellung der Funktionsweise einer Kaffeemaschine beim Bereiten eines Kaffeegetränkes mit feinkörnigem Kaffeepulver und
- **Fig. 2:**: eine schematisierte Darstellung der Funktionsweise der Kaffeemaschine der Figur 1 beim Bereiten eines Kaffeegetränkes mit gröberkörnigem Kaffeepulver.

Eine Kaffeemaschine 1 umfasst eine Brüheinheit 2. Die Brüheinheit 2 verfügt bei dem dargestellten Ausführungsbeispiel über einen Brühzylinder 3, der in längsaxialer Richtung durch einen in den Figuren nicht dargestellten Spindelantrieb bewegbar ist. Die Bewegungsrichtung des Brühzylinders 3 der Brüheinheit 2 ist durch die am unteren rechten Ende des Brühzylinders 3 dargestellten Doppelpfeil kenntlich gemacht. Die Brüheinheit 2 verfügt ferner über zwei Kolben 4, 5, die bei entsprechender Stellung einen Abschnitt des Brühzylinders 3 in längsaxialer Richtung begrenzen und dadurch eine Brühkammer 6 ausbilden. Die Größe der Brühkammer 6 ist somit definiert durch den Abstand der beiden Kolben 4, 5 von einander. Der Kolben 4 ist durch den Brühzylinder 3 angetrieben, während der Kolben 5 in nicht näher dargestellter Art und Weise gegenüber dem beweglichen Kolben 4 feststehend angeordnet ist. Der bewegliche Kolben 4 ist an eine insgesamt mit dem Bezugszeichen 7 gezeichnete Heißwasserzuführung angeschlossen. Die Heißwasserzuführung 7 dient zum Zuführen von heißem Wasser, damit dieses durch den Kolbenboden des Kolbens 4 in die Brühkammer 6 eingebracht werden kann. Zum Fördern des in die Brühkammer 6 einzuführenden Heißwassers dient eine Pumpe 8, die an einen zum Befüllen aus dem Gehäuse der Kaffeemaschine 1 herausnehmbaren Wasserbehälter 9 angeschlossen ist. Die Pumpe 8 ist elektromotorisch betrieben. Der Pumpe 8 in Strömungsrichtung des zuzuführenden Heißwasser nachgeschaltet ist eine Durchflussmesseinrichtung 10 und dieser wiederum nachgeschaltet ein Thermoblock 11, in dem das in die Brühkammer 6 zuzuführende Heißwasser auf die gewünschte Temperatur erwärmt wird.

Der Kolbenboden des feststehenden Kolbens 5 ist durch eine in der Figur nicht näher dargestellte Siebplatte gebildet. Die Siebplatte dient zum Zurückhalten von in der Brühkammer befindlichem Kaffeepulver. Diese Siebplatte begrenzt brühkammerseitig einen Sammler, an den eine Kaffeeauslaufleitung 12 angeschlossen ist. Die Kaffeeauslaufleitung 12 mündet letztendlich in einen Kaffeeauslauf 13, unter dem in nicht näher dargestellter Art und Weise eine Tassenabstellfläche angeordnet ist. Eine auf dieser abgestellten Tasse 14 dient zum Auffangen des aus dem Kaffeeauslauf 13 auslaufenden gebrühten Kaffees.

In die Kaffeeauslaufleitung ist ein federbelastetes Crema-Ventil 15 eingeschaltet, durch das die Kaffeeauslaufleitung 12 verschlossen ist. Das Crema-Ventil 15 öffnet selbsttätig gegen die Kraft der Rückstellfeder, wenn die eingangsseitig anstehende Kaffeegetränkflüssigkeit mit einem dem Öffnungsdruck überschreitenden Druck ansteht. Das Crema-Ventil 15 des dargestellten Ausführungsbeispiels ist an ein Stellelement 16 angeschlossen, mit dem das Crema-Ventil 15 auch unabhängig von dem anstehenden Flüssigkeitsdruck bei entsprechender Ansteuerung geöffnet werden kann. Durch das Stellelement 16 kann das Crema-Ventil 15 in unterschiedliche Offen-Stellungen gebracht werden.

Die Durchflussmesseinrichtung 10 dient zum Erfassen der Fördergeschwindigkeit des der Brühkammer 6 zugeführten Wassers. Die Durchflussmesseinrichtung 10 ist über eine Signalleitung 11 an eine zentrale Prozessoreinheit 17 angeschlossen. Die zentrale Prozessoreinheit 17 dient zum Auswerten der Signale der Durchflussmesseinrichtung 10. Die Prozessoreinheit 17 dient zum Ansteuern von Aktoren der Kaffeemaschine 1, damit durch diese der Brühzyklus in Abhängigkeit von dem durch das in der Brühkammer 6 befindliche Kaffeepulver bereitgestellten Gegendruck angepasst werden kann. Bei dem dargestellten Ausführungsbeispiel sind als Aktoren das Stelleelement 16 des Crema-Ventils 15, der Antrieb des Brühzylinders 3, die Heizung des Thermoblocks 11 und die Pumpe 8 vorgesehen. Diese Aktoren 3, 8, 11, 16 sind jeweils über eine Signalleitung an die zentrale Prozessoreinheit 17 angeschlossen.

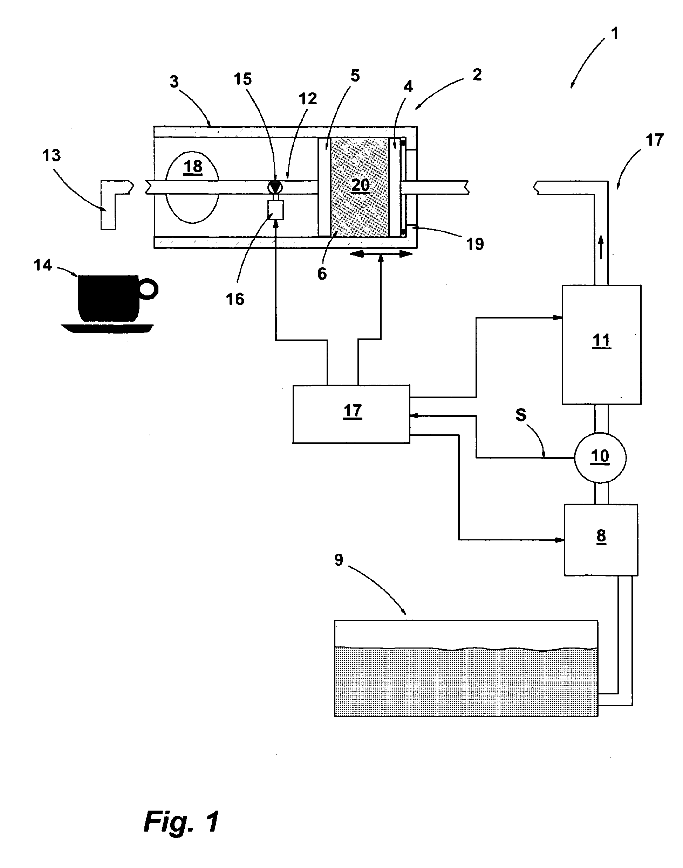

Der Brühzylinder 3 verfügt über eine Öffnung 18 zum Einbringen von Kaffee. Im Rahmen eines Brühzyklus wird der Brühzylinder 3 und mit diesem ebenfalls der bewegliche Kolben 4 in längsaxialer Richtung bewegt. Nachdem durch die Öffnung 18 Kaffeepulver in den Brühzylinder 3 eingebracht worden ist, fährt der Brühzylinder 3 und in Folge des rückwärtigen Anschlages 19 ebenfalls der bewegliche Kolben 4 in Richtung zu dem feststehenden Kolben 5 solange, bis infolge der durch das in dem Brühzylinder 3 eingebrachte Kaffeepulver 20 ein vorbestimmter Druck durch die beiden Kolben 4, 5 ausgeübt wird, dabei dient der Kolben 5 als Widerlager. In der Darstellung der Figur 1 befindet sich in der Brühkammer 6 des Brühzylinders 3 fein gemahlenes Kaffeepulver zum Bereiten eines Espressokaffees.

Nachdem der Brühzylinder 3 und mit diesem der bewegliche Kolben 4 in ihre bestimmungsgemäße Brühstellung gebracht worden sind, wird die Pumpe 8 bestromt, um aus dem Wasserbehälter 9 Wasser zum Zuführen desselben in die Brühkammer 6 zu fördern. In dem Thermoblock 11 wird das Wasser auf die gewünschte Temperatur gebracht, bevor dieses über eine Heißwasserzuführleitung dem beweglichen Kolben 4 zugeführt und über diesen das heiße Wasser in die Brühkammer 6 eindringt. Bei den dargestellten Ausführungsbeispiel arbeitet die Pumpe 8 in dieser ersten Phase der Heißwasserzuführung mit einer vordefinierten Leistung, die beispielsweise die Nennleistung sein kann. Die Durchflussrate des zugeführten Heißwassers ist abhängig von der freien durchströmbaren Querschnittsfläche zwischen den einzelnen, in der Brühkammer 6 befindlichen Kaffeekörnern. Da diese bei dem Kaffeepulver 20 feinkörnig sind, wird durch das in der Brühkammer 6 verdichtete Kaffeepulver 20 ein Gegendruck erzeugt. Proportional zu dem durch das Kaffeepulver 20 erzeugten Gegendruck verhält sich die Durchflussrate des durch die Pumpe 8 geförderten Wassers. Erfasst wird dieses in der Durchflussmesseinrichtung 10. Ein diesbezügliches Messsignal wird von der zentralen Prozessoreinheit 17 dahingehend ausgewertet, dass es sich bei dem in der Brühkammer 6 befindlichen Kaffeepulvers 20 um einen feinkörnig gemahlenen Kaffee handelt. Da typischer Weise Espressokaffee sehr fein gemahlen wird, wird systemseitig darauf geschlossen, dass innerhalb der Brühkammer 6 Kaffee zum Bereiten eines Espressos enthalten ist. Wird in dieser ersten Phase des Brühzyklus die Pumpe 8 mit ihrer Nennleistung betrieben, wird diese auch in den weiteren Phasen des Brühzyklus mit dieser Leistung betrieben werden. Wird die Pumpe 8 dagegen in dieser ersten Messphase des Brühzyklus mit einer mittleren Leistung betrieben, wird diese durch die zentrale Prozessoreinheit 17 für einen Betrieb mit höherer Leistung angesteuert, damit mit möglichst hohem Druck das Heißwasser der Brühkammer 6 zum Bereiten des gewünschten Espressokaffees zugeführt werden kann. Dieser höhere Druck ist notwendig, zum einen um das Heißwasser durch das feingemahlene Kaffeepulver 20 hindurch zu pressen und um das in der Kaffeeausleitung 12 eingeschaltete Crema-Ventil 15 selbsttätig zum Öffnen zu bringen.

Je nach dem mit welchen Randparametern die erste Phase des Brühzyklus - die Messphase - durchgeführt wird, erfolgt in Abhängigkeit von der Körnung des in der Brühkammer 6 befindlichen Kaffeepulvers eine Ansteuerung von weiteren Aktoren, beispielsweise des Thermoblocks 11 zum Erhöhen oder Reduzieren der Temperatur, des Stellelement 16 zum Öffnen des Crema-Ventils 15 in eine gewisse Stellung, eine Ansteuerung des Antriebs des Brühzylinders, beispielsweise zur Vergrößerung der Brühkammer 6 und/oder der Pumpenleistung.

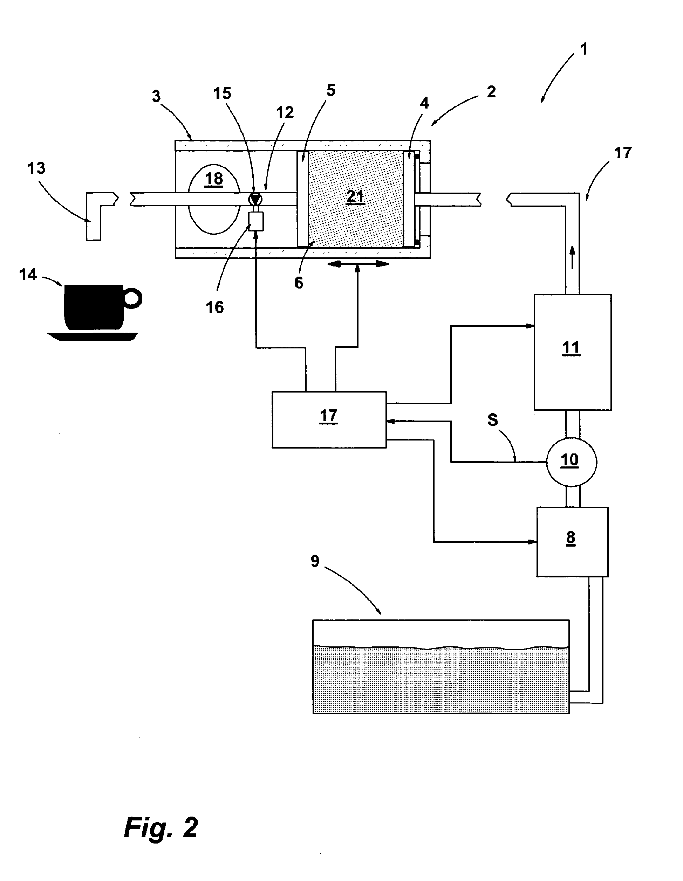

Figur 2 zeigt die Kaffeemaschine 1 beim Brühen eines gröberkörnig gemahlenen Kaffeepulvers 21. Infolge der gröberen Körnung des Kaffeepulvers 21 wird in der Messphase des Brühzyklus eine höhere Durchflussrate des von der Pumpe 8 geförderten Wassers detektiert. Systemseitig wird dieses interpretiert als das Vorhandensein eines Kaffeepulvers, mit dem ein anderes Kaffeegetränk, als zu Figur 1 beschrieben, bereitet werden soll. Bei dem dargestellten Ausführungsbeispiel soll mit dem Kaffeepulver 21 ein normaler Kaffee gebrüht werden. Nach Detektieren der Körnung des Kaffeepulvers 21 wird durch die zentrale Prozessoreinheit 17 der Antrieb des Brühzylinders 3 angesteuert, damit dieser von dem feststehenden Kolben 5 etwas zurück fahren kann. Durch den sich innerhalb der Brühkammer 6 aufbauenden Innendruck wird hierdurch gleichzeitig der bewegliche Kolben 4 in dieselbe Richtung zurück gefahren, wodurch sich der Abstand der beiden Kolben 4, 5 vergrößert. Das Volumen der Brühkammer 6 ist auf diese Weise vergrößert, mithin das darin enthaltene Kaffeepulver nicht mehr verdichtet. Dieses schwimmt in der durch die Kolben 4, 5 abgedichteten Brühkammer 6. Da zum Zubereiten eines solchen Kaffees eine geringere Temperatur des zugeführten heißen Wassers gewünscht wird, wird durch die zentrale Prozessoreinheit 17 ebenfalls der Thermoblock 11 entsprechend angesteuert, damit das der Brühkammer 6 zugeführte Heißwasser eine den Vorgaben entsprechend geringere Temperatur aufweist. Ebenfalls wird bei dem dargestellten Ausführungsbeispiel die Pumpe 8 durch die zentrale Prozessoreinheit 17 zum Verringern der Pumpenleistung angesteuert. Mit diesen Maßnahmen möchte man erreichen, dass das zugeführte Heißwasser eine gewisse Verweildauer innerhalb der Brühkammer 6 hat, bevor dieses über die Kaffeeauslaufleitung 12 ausläuft. Da ein solcher Kaffee mit einem geringeren Druck des zugeführten Heißwassers gebrüht wird, wird durch die zentrale Prozessoreinheit 17 ebenfalls das Stellelement 16 des Crema-Ventils 15 zum Öffnen desselben angesteuert. Durch dieses aktive Öffnen des Crema-Ventils 15 kann die in der Brühkammer 6 enthaltene Flüssigkeit ohne weiteres aus dieser auslaufen. Die Ansteuerung des Crema-Ventils 15 kann eingesetzt werden, um die Verweildauer des in der Brühkammer 6 befindlichen Heißwassers zu bestimmen. Daher kann vorgesehen sein, das Crema-Ventil 15 erst dann zu öffnen, wenn das in die Brühkammer 6 zugeführte Heißwasser eine gewisse Verweildauer innerhalb der Brühkammer 6 hatte.

Die Möglichkeit einer Bereitung von Kaffeegetränken mit der Kaffeemaschine 1 ist beispielhaft beschrieben. Aus dieser Beschreibung wird deutlich, dass mit einer mit einfachen Mitteln durchführbaren Messmethode, insbesondere unter Verwendung ohnehin in eine Kaffeemaschine vorhandener Elemente der Brühzyklus zum Bereiten eines Kaffeegetränks in Abhängigkeit von der in der Brühkammer befindlichen Körnung des Kaffeepulvers änderbar ist, so dass mit der für eine Bereitung von Espresso ausgelegten Kaffeemaschine 1 ebenfalls andere Kaffeegetränke mit unterschiedlichen Brühzyklen bereitet werden können.

Die in den Figuren dargestellte Brüheinheit 2 ist lediglich beispielhaft zu verstehen. Die Erfindung eignet sich ebenfalls für solche Kaffeemaschinen, die eine definierte Größe ihrer Brühkammer aufweisen und mit wasserdurchlässigen Beuteln oder Hüllen portionsweise verpackten Kaffee verwenden. Gerade im Zusammenhang mit einer solchen Maschine eignet sich die vorbeschriebene Ausstattung, da bei einer solchen Kaffeemaschine ein Kaffeewechsel mit jeder Portion erfolgen kann, während dieses bei so genannten Kaffeevollautomaten eher nicht die Regel ist.

Der erfassbare Gegendruck kann ebenfalls durch die Lochung des der Kaffeeauslaufleitung vorgeschalteten Siebes vorgenommen werden. Ist dieser Siebträger austauschbar sein, dann kann in Abhängigkeit von dem eingesetzten Siebträger dem daran befestigen Sieb und ebenfalls eine Erfassung des geänderten Gegendrucks erfolgen. Unter Umständen besteht der Wunsch bei bestimmten Kaffeegetränken unterschiedliche Siebträger mit verschiedenen Lochungen einzusetzen.

### Bezugszeichenliste

- 1: Kaffeemaschine
- 2: Brüheinheit
- 3: Brühzylinder
- 4: Kolben
- 5: Kolben
- 6: Brühkammer
- 7: Heißwasserzuführung
- 8: Pumpe
- 9: Wasserbehälter
- 10: Durchflussmesseinrichtung
- 11: Thermoblock
- 12: Kaffeeauslaufleitung
- 13: Kaffeeauslauf
- 14: Tasse
- 15: Crema-Ventil
- 16: Stellelement
- 17: Zentrale Prozessoreinheit
- 18: Öffnungen
- 19: Anschlag
- 20: Kaffeepulver
- 21: Kaffeepulver

## Patentansprüche

1. Verfahren zur Bereitung eines Kaffeegetränks mit einer Kaffeemaschine umfassend eine an eine Heißwasserzuführung (7) angeschlossene Brüheinheit (2) mit einer beim Brühvorgang das gemahlene Kaffeepulver (20, 21) aufnehmenden Brühkammer (6) sowie mit einer Kaffeeauslaufleitung (12), in die ein Crema-Ventil (15) eingeschaltet ist, und umfassend eine elektromotorisch betriebene Pumpe (8) zum Fördern des der Brüheinheit (2) zuzuführenden Heißwassers, wobei die Leistung der Pumpe (8) zum Bereiten eines Espressokaffees ausgelegt ist, **dadurch gekennzeichnet, dass** in einer ersten Phase eines Brühzyklusses - einer Messphase - die Körnung des in der Brühkammer (6) befindlichen Kaffeepulvers (20, 21) anhand des bei diesem Brühvorgang dem der Brühkammer zuzuführenden Heißwasser durch das in der Brühkammer (6) befindliche Kaffeepulver (20, 21) entgegenwirkenden Gegendruckes bestimmt wird und in Abhängigkeit von der Körnung des in der Brühkammer (6) befindlichen Kaffeepulvers (20, 21) eine Ansteuerung eines oder mehrerer Aktoren (3, 8, 11, 16) zum Steuern des weiteren Brühzyklusses erfolgt.

2. Verfahren nach Anspruch 1, **dadurch gekennzeichnet, dass** als weitere Aktoren ein Thermoblock (11) zum Erhöhen oder Reduzieren der Temperatur des der Brühkammer (6) zuzuführenden Heißwassers, ein Stellelement (16) zum Öffnen des Crema-Ventils (15) in eine gewisse Stellung, eine Ansteuerung des Antriebs des Brühzylinders (6) und/oder die Pumpe (8) angesteuert werden.

3. Kaffeemaschine zum Durchführen des Verfahrens nach Anspruch 1 oder 2, umfassend eine an eine Heißwasserzuführung (7) angeschlossene Brüheinheit (2) mit einer beim Brühvorgang das gemahlene Kaffeepulver (20, 21) aufnehmenden Brühkammer (6) sowie mit einer Kaffeeauslaufleitung (12), in die ein Crema-Ventil (15) eingeschaltet ist, und umfassend eine elektromotorisch betriebene Pumpe (8) zum Fördern des der Brüheinheit (2) zuzuführenden Heißwassers, wobei die Leistung der Pumpe (8) zum Bereiten eines Espressokaffees ausgelegt ist, **dadurch gekennzeichnet, dass** die Kaffeemaschine (1) zum Erfassen des bei einem Brühvorgang dem der Brühkammer (6) zuzuführenden Heißwasser durch das in der Brühkammer (6) befindliche Kaffeepulver (20, 21) entgegenwirkenden Gegendrucks über eine in die Heißwasserzuführung (7) eingeschaltete Durchflussmesseinrichtung (10) oder eine Einrichtung zum Erfassen einer oder mehrerer lastabhängiger Größen des Pumpenmotors verfügt und diese Einrichtung an eine Auswerteeinheit (17) angeschlossen ist, die in Abhängigkeit von dem erfassten Gegendruck Steuersignale erzeugt, durch die ein oder mehre Aktoren (3, 8, 11, 16) der Kaffeemaschine ansteuerbar sind.

4. Kaffeemaschine nach Anspruch 3, **dadurch gekennzeichnet, dass** die Durchflussmessvorrichtung integraler Bestandteil der das Heißwasserfördernden Pumpe ist.

5. Kaffeemaschine nach Anspruch 3 oder 4, **dadurch gekennzeichnet, dass** das in die Kaffeeauslaufleitung (12) eingeschaltete Crema-Ventil (15) an einen als Aktor dienendes Stelleelement (16) angeschlossen ist, durch das dieses in eine Offen-Stellung gebracht werden kann.

6. Kaffeemaschine nach einem der Ansprüche 3 bis 5, **dadurch gekennzeichnet, dass** durch ein Steuersignal der Auswerteeinheit (17) die Heißwassertemperaturregelung einstellbar ist.

7. Kaffeemaschine nach einem der Ansprüche 3 bis 6, **dadurch gekennzeichnet, dass**, durch ein Steuersignal der Auswerteeinheit (17) die Pumpenleistung regelbar ist.

8. Kaffeemaschine nach einem der Ansprüche 3 bis 7, **dadurch gekennzeichnet, dass** die Brüheinheit (2) über zwei gegeneinander bewegbare Kolben (4, 5) verfügt, durch deren Abstand zueinander die Größe der Brühkammer (6) beim Vorgang des Brühens des Kaffees bestimmt ist, und wenigstens ein Kolben (4) mittelbar oder unmittelbar kinematisch an einen von der Auswerteeinheit (17) angesteuerten Aktor angeschlossen ist, so dass durch diesen Aktor unmittelbar oder mittelbar der Abstand zu dem anderen Kolben (5) einstellbar ist.

## Claims

1. Method for preparing a coffee drink using a coffee maker comprising a brew unit (2) connected to a hot water inlet (7) with a brew chamber (6) receiving the ground coffee powder (20, 21) during the percolation process and with a coffee outlet line (12) in which a crema valve (15) is actuated, and comprising an electric motor-operated pump (8) delivering the heat water to be supplied to the brew unit (2), whereby the output of the pump (8) is designed for preparing an espresso coffee, **characterised in that**, in a first phase of a brewing cycle - a measuring phase - the granulation of the coffee powder (20, 21) in the brew chamber (6) is determined by means of the counter pressure which counteracts, during this percolation, the heat water to be supplied to the brew chamber through the coffee powder (20, 21) in the brew chamber (6) and, depending on the granulation of the coffee powder (20, 21) in the brew chamber (6), one or several actuator(s) (3, 8, 11, 16) will be selected in order to control the further brewing cycle.

2. Method according to claim 1, **characterised in that**, as further actuators, a thermal block (11) for increasing or reducing the temperature of the heat water to be supplied to the brew chamber (6), an adjusting element (16) for opening the crema valve (15) in a certain position, an actuation of the drive of the brew cylinder (6) and/or the pump (8) will be selected.

3. Coffee maker for performing the method according to claim 1 or 2, comprising a brew unit (2) connected to a heat water inlet (7) with a brew chamber (6) receiving the ground coffee powder (20, 21) during percolation and with a coffee outlet line (12) in which the one crema valve (15) is actuated, and comprising an electric motor-operated pump (8) delivering the heat water to be supplied to the brew unit (2), whereby the output of the pump (8) is designed for preparing an espresso coffee, **characterised in that** the coffee maker (1), in order to register the counter pressure which counteracts, during percolation, the heat water to be supplied to the brew chamber (6) through the coffee powder (20, 21) in the brew chamber (6), has a flow rate measuring device (10) actuated in the heat water inlet (7) or a facility for registering one or several load-dependent variable(s) of the pump motor and this facility is connected to an evaluation unit (17) which, depending on the counter pressure registered, creates control signals which are selectable through one or several actuator(s) (3, 8,11,16) of the coffee maker.

4. Coffee maker according to claim 3, **characterised in that** the flow rate measuring device is an integral part of the pump delivering the heat water.

5. Coffee maker according to claim 3 or 4, **characterised in that** the crema valve (15) actuated in the coffee outlet line (12) is connected to an adjusting element (16) serving as an actuator, through which it can be placed in an open position.

6. Coffee maker according to one of the claims 3 to 5, **characterised in that** the heat water temperature control is adjustable through a control signal of the evaluation unit (17).

7. Coffee maker according to one of the claims 3 to 6, **characterised in that** the pump output is controllable through a control signal of the evaluation unit (17).

8. Coffee maker according to one of the claims 3 to 7, **characterised in that** the brew unit (2) has two pistons (4, 5) which can be moved relative to one another, through whose distance from one another the size of the brew chamber (6) is determined during the percolation of the coffee, and at least one piston (4) is indirectly or directly kinematically connected to an actuator selected by the evaluation unit (17) so that, through this actuator, the distance to the other piston (5) can be adjusted directly or indirectly.

## Revendications

1. Procédé de préparation d'une boisson à base de café avec une machine à café comprenant une unité de percolation (2) raccordée à une arrivée d'eau chaude (7), avec une chambre de percolation (6) recevant la mouture de café (20, 21) lors du processus de percolation ainsi qu'avec un conduit d'écoulement de café (12) dans lequel est intégrée une soupape à crème (15), et comprenant une pompe (8) électromotorisée destinée à acheminer l'eau chaude vers l'unité de percolation (2), la puissance de la pompe (8) étant adaptée à la préparation d'un expresso, **caractérisé en ce qu'**au cours d'une première phase d'un cycle de percolation - phase de mesure - la granulométrie de la mouture de café (20, 21) se trouvant dans la chambre de percolation (6) est déterminée au moyen de la contrepression s'opposant, en raison de la présence de la mouture de café (20, 21) dans la chambre de percolation (6), à l'eau chaude acheminée dans la chambre de percolation lors du processus de percolation et **en ce que**, en fonction de la granulométrie de la poudre de café (20, 21) se trouvant dans la chambre de percolation (6), une activation d'un ou de plusieurs actionneurs (3, 8, 11, 16) a lieu afin de commander la suite du cycle de percolation.

2. Procédé selon la revendication 1 **caractérisé en ce que** les autres actionneurs activés sont un bloc thermique (11) destiné à augmenter ou réduire la température de l'eau chaude acheminée vers la chambre de percolation (6), un élément de réglage (16) destiné à ouvrir la soupape à crème (15) dans une position donnée, une commande d'entraînement du cylindre de percolation (6) et/ou la pompe (8).

3. Machine à café destinée à réaliser le procédé selon la revendication 1 ou 2, comprenant une unité de percolation (2) raccordée à une arrivée d'eau chaude (7), avec une chambre de percolation (6) recevant la mouture de café (20, 21) lors du processus de percolation ainsi qu'avec un conduit d'écoulement de café (12) dans lequel est intégrée une soupape à crème (15), et comprenant une pompe (8) électromotorisée destinée à acheminer l'eau chaude vers l'unité de percolation (2), la puissance de la pompe (8) étant adaptée à la préparation d'un expresso, **caractérisée en ce que** la machine à café (1) dispose, afin de détecter la contrepression opposée, en raison de la présence de la mouture de café (20, 21) dans la chambre de percolation (6), à l'eau chaude acheminée dans la chambre de percolation (6) lors du processus de percolation, d'un débitmètre (10) intégré dans l'arrivée d'eau chaude (7) ou d'un équipement destiné à détecter une ou plusieurs grandeurs du moteur de la pompe qui varient avec la charge et que cet équipement est raccordé à une unité d'exploitation (17) qui, en fonction de la contrepression enregistrée, génère des signaux de commande par lesquels un ou plusieurs actionneurs (3, 8, 11, 16) de la machine à café peuvent être activés.

4. Machine à café selon la revendication 3 **caractérisée en ce que** le débitmètre est une composante intégrale de la pompe acheminant l'eau chaude.

5. Machine à café selon la revendication 3 ou 4 **caractérisée en ce que** la soupape à crème (15) intégrée dans le conduit d'écoulement de café (12) est raccordée à un élément de réglage (16) faisant office d'actionneur, par lequel cette dernière peut être mise en position ouverte.

6. Machine à café selon l'une des revendications 3 à 5 **caractérisée en ce que** la régulation de la température de l'eau chaude peut être ajustée par un signal de commande de l'unité d'exploitation (17).

7. Machine à café selon l'une des revendications 3 à 6 **caractérisée en ce que** la puissance de la pompe peut être réglée par un signal de commande de l'unité d'exploitation (17).

8. Machine à café selon l'une des revendications 3 à 7 **caractérisée en ce que** l'unité de percolation (2) dispose de deux pistons (4, 5) mobiles l'un par rapport à l'autre, dont la distance entre les deux détermine la dimension de la chambre de percolation (6) lors du processus de percolation du café, et **en ce qu'**au moins un piston (4) est directement ou indirectement raccordé cinématiquement à l'un des actionneurs activés par l'unité d'exploitation (17), de sorte que cet actionneur permet de régler indirectement ou directement la distance par rapport à l'autre piston (5).
